# EUROPÄISCHE PATENTANMELDUNG

(11) **EP 3 982 498 A1**
(43) Veröffentlichungstag der Anmeldung: **13.04.2022**
(21) Anmeldenummer: 21020503.5
(22) Anmeldetag: 07.10.2021
(51) Int. Cl.: H02G 3/38, H02G 3/00

(54) **WANDKANAL FÜR LEITUNGSGEBUNDENE OPTISCHE, ELEKTRISCHE UND/ODER ELEKTRONISCHE SYSTEME**

(30) Priorität: 07.10.2020 DE 102020006134
(71) Anmelder: PUK Group GmbH & Co. KG, 12057 Berlin (DE)
(72) Erfinder: Plath, Pierre, 35753 Greifenstein (DE); Barth, Michael, 91239 Henfenfeld (DE)
(74) Vertreter: Jungblut & Seuss

(57) **Zusammenfassung**

Die Erfindung betrifft einen Wandkanal (1) für leitungsgebundene optische, elektrische und/oder elektronische Systeme, mit einer wannenförmige Kabelrinne (2) mit einem Bodenteil (3) und zwei mit dem Bodenteil (3) verbundenen Seitenteilen (4, 5) und einer Kabelrinnenabdeckung (6), wobei das Bodenteil (3) und die Seitenteile (4, 5) optional geschlossenflächig ausgeführt sind, wobei in der Kabelrinne (2) optische Leitungen (7), elektrische Leitungen (8), und/oder elektrische und/oder elektronische Schaltungen (9) angeordnet sind. Sie ist dadurch gekennzeichnet, dass der Wandkanal (1) in der Form eines zum späteren Einbau in ein Betonfertigteil (10) oder Bauwerk (11) vorbestimmten Bauelementes ausgebildet und eigenständig handhabbar ist, und dass die optischen Leitungen (7), elektrischen Leitungen (8), und/oder elektrischen und/oder elektronischen Schaltungen (9) in der Kabelrinne (2) oder an der Kabelrinnenabdeckung (6) befestigt und vorkonfektioniert sind.

## Beschreibung

### Gebiet der Erfindung.

Die Erfindung betrifft einen Wandkanal für leitungsgebundene optische, elektrische und/oder elektronische Systeme, mit einer wannenförmige Kabelrinne mit einem Bodenteil und zwei mit dem Bodenteil verbundenen Seitenteilen und eine Kabelrinnenabdeckung aufweist, wobei das Bodenteil und die Seitenteile optional geschlossen flächig ausgeführt sind, wobei in der Kabelrinne optische Leitungen, elektrische Leitungen, und/oder elektrische und/oder elektronische Schaltungen und/oder elektrische oder elektronische Anschlussvorrichtungen angeordnet sind. Die Erfindung betrifft des Weiteren Verwendungen eines solchen Wandkanals.

### Hintergrund der Erfindung und Stand der Technik.

Wandkanäle des eingangs genannten Aufbaus sind vielfältig aus der Praxis bekannt. Zu deren Erstellung wird typischerweise nach Erstellung eines Bauwerkes oder eine Betonfertigteils ein Schlitz in das Bauwerk oder das Betonfertigteil eingebracht. Dieser Schlitz bildet entweder dann selbst den Wandkanal, oder es wird ein separates Kanalelement in dem Schlitz eingesetzt. Hierauf folgt dann der Einbau von optischen oder elektrischen Leitungen, gefolgt von dem Einbau von Anschlüssen für besagte Leitungen.

Dies ist aufwändig, weil der Einbau der Leitungen erst nach Erstellung eines Bauwerkes erfolgt und zudem hierfür zunächst Schlitze in ein Bauwerk bzw. Betonfertigteil eingebracht werden müssen, bevor der Einbau der Leitungen stattfinden kann. Hinzu kommt, dass das Schlitzen eines Bauwerkes bzw. eines Betonfertigteils selbiges strukturell bzw. statisch in gewissem Grade schwächt.

### Technisches Problem der Erfindung.

Der Erfindung liegt daher das technische Problem zu Grunde, einen Wandkanal und dessen Verwendung anzugeben, wodurch der Montageaufwand bezüglich optischer und/oder elektrischer Systeme auf einer Baustelle reduziert wird und zudem durch den Einbau zumindest keine strukturelle bzw. statische Schwächung eines Bauwerkes oder eines Betonfertigteils eintritt.

### Grundzüge der Erfindung und bevorzugte Ausführungsformen.

Zur Lösung dieses technischen Problems lehrt die Erfindung, dass der Wandkanal in der Form eines zum späteren Einbau in ein Betonfertigteil oder Bauwerk vorbestimmten Bauelementes ausgebildet und eigenständig handhabbar ist, und dass die optischen Leitungen, elektrischen Leitungen, und/oder elektrischen und/oder elektronischen Schaltungen in der Kabelrinne oder an der Kabelrinnenabdeckung befestigt und optional vorkonfektioniert sind.

Hierbei ist die Bestimmung zum Einbau in ein Betonfertigteil oder Bauwerk keine Zweckangabe, sondern ein funktionales Merkmal.

Der Begriff des Vorkonfektionierens bezeichnet hierbei, dass besagte Leitungen und/oder besagte Schaltungen in der Kabelrinne oder an der Kabelrinnenabdeckung positioniert, befestigt und ggf. miteinander verbunden sind, wobei Enden von Leitungen in den Bereichen der Enden der Kabelrinne angeordnet sind zwecks Anschluss dieser Leitungen an Leitungen anderer Kabelrinnen, Kanäle, Medien oder Anschlüsse.

Mit anderen Worten ausgedrückt, es wird ein Wandkanal zur Verfügung gestellt, welcher zum Einbau in ein Bauwerk oder ein Betonfertigteil bestimmt, jedoch (noch) nicht darin eingebaut ist. Der Wandkanal enthält jedoch bereits alle optischen, elektrischen und elektronischen Komponenten, welche normalerweise erst bei Rohbau eines Bauwerkes eingebaut werden. Da der Wandkanal alternativ diese Komponenten (der Begriff der Komponenten umfasst hierbei besagte optische oder elektrische Leitungen, elektrische und/oder elektronische Schaltungen, einschließlich elektrischer Schalter, und/oder elektrische oder elektronische Anschlussvorrichtungen, einschließlich Anschlussdosen) oder einen Teil dieser Komponenten an der Kabelrinnenabdeckung trägt, kann in dieser Variante eine Installation der Komponenten auch nach der Rohbauphase erfolgen, nämlich im Zuge des Anbringens der Kabelkanalabdeckung.

Der Begriff des Wandkanals umfasst dabei neben dem Einsatz in Wänden auch den Einsatz in Böden und/oder Decken.

Mit der Erfindung wird erreicht, dass bereits bei der Errichtung eines Bauwerkes bzw. der Herstellung eines Betonfertigteils die optischen, elektrischen und elektronischen Systeme automatisch integriert werden. Auf einer Baustelle müssen dann nur noch Enden verschiedener Wandkanäle oder eines Wandkanals und anderer Medien oder Gewerke (beispielsweise in Boden- oder Deckenkanälen, oder diskreter Anschlüsse) miteinander mechanisch, optisch und/oder elektrisch miteinander verbunden werden bzw. es muss ein Anschluss an die beim Bauwerk zur Verfügung stehende optische und/oder elektrische Infrastruktur, wie beispielsweise elektrischer Hausanschluss zur Stromversorgung oder Hausanschlüsse für optische und/oder elektrische Signalübertragungssysteme, erfolgen.

Hierfür ist vorgesehen, dass zumindest ein Ende eines Wandkanals im unmittelbaren Bereich einer Kante eines Betonfertigteiles endet. Es können natürlich auch jeweils verschiedene Enden eines Wandkanals in den unmittelbaren Bereichen verschiedener Kanten eines Betonfertigteils enden. In letzterem Fall entspricht die Länge eines Wandkanals etwas einer Längendimension eines Betonfertigteils in Richtung parallel zu einer Hauptebene eines Betonfertigteils.

Hierbei wird die Anordnung des im Bereich einer Kante eines Betonfertigteils endenden Endes eines Wandkanals mit der Maßgabe gewählt, dass bei Aneinanderfügen verschiedener und mit jeweils einem Wandkanal ausgestatteter Betonfertigteile die Enden der Wandkanäle der verschiedenen Betonfertigteile aneinander anschließen bzw. unmittelbar benachbart angeordnet sind. So lassen sich die jeweiligen Systeme und/oder Leitungen für Medien aneinander gefügter Betonfertigteile einfach und schnell miteinander verbinden. Weitere bauliche Maßnahmen an den Betonfertigteilen, wie Anbringung von Schlitzen für Leitungen oder Ausnehmungen für Verteilerdosen entfallen. All dies trifft natürlich analog für Boden- oder Deckenkanäle und deren Verbindung mit Wandkanälen zu.

Hinzu kommt, dass ein erfindungsgemäßer Wandkanal sogar auch zur strukturellen bzw. statischen Verstärkung eines Bauwerkes oder eines Betonfertigteiles beizutragen vermag, wozu auf die folgend beschriebenen Ausführungsformen und Verwendungen verwiesen wird. Insbesondere kann dies auch konstruktiv bei der Dimensionierung eines Bauwerkes berücksichtigt bzw. eingesetzt werden, beispielsweise durch Einsatz eines erfindungsgemäßen Wandkanals als Aussteifungselement. Schließlich kann ein erfindungsgemäßer Wandkanal auch als Dehnungsfuge funktionieren bzw. eingesetzt werden, wodurch auftretenden Verformungen von Elementen eines Bauwerkes entgegengewirkt werden kann.

Ist der erfindungsgemäße Wandkanal zum Eingießen in einen fluiden aushärtbaren Werkstoff bestimmt, dann wird es sich empfehlen, dass Bodenteil und Seitenteile geschlossen sind, also der fluide Werkstoff nicht vor dem Aushärten in den Innenraum des Wandkanals eindringen und die ggf. darin eingebauten Komponenten beschädigen kann. Ist der erfindungsgemäße Wandkanal dagegen zum Einbau in ein Bauelement, welches ausgehärtet ist, bestimmt, so ist dies nicht notwendig.

Optional ist es auch möglich, dass zusätzlich (oder stattdessen) Leitungen nicht-elektrischer oder nichtoptischer Art in der Kabelrinne oder an der Kabelrinnenabdeckung angebracht sind. Hierzu zählen beispielsweise Wasserleitungen, Gasleitungen, oder Heizungsleitungen. Hierbei sind natürlich die baurechtlichen Vorgaben über die gemeinsame Verlegung von Leitungen verschiedener Arten zu beachten.

Im Einzelnen bestehen die folgenden Möglichkeiten der weiteren Ausbildung.

So kann die Kabelrinne beispielsweise in Richtung der Längserstreckung der Kabelrinne Trennstege aufweisen, um verschiedene Arten von Komponenten voneinander abzutrennen. In den hierdurch entstehenden Teilräumen sind dann verschiedene Arten von Komponenten (Leitungen und ggf. zugehörige elektrische oder elektronische Schaltungen oder Anschlussvorrichtungen) voneinander getrennt. Beispielsweise können in einem ersten Teilraum besagte optische, elektrische und/oder elektronische Komponenten, in zumindest einem anderen Teilraum dagegen Leitungen für Wasser, Gas oder Heizung angeordnet sein. Dann wird es sich empfehlen, dass die Trennstege gegen die Kabelrinnenabdeckung dichtende Dichtelemente tragen, oder an der Kabelrinnenabdeckung Dichtelemente angebracht sind, welche an den freien Kanten der Trennstege beim Montieren der Kabelrinnenabdeckung dichtend zum Anliegen kommen. Natürlich lassen sich so auch verschiedene optische, elektrische und elektronische Leitungen und zugehörige Komponenten voneinander trennen, beispielsweise Leitungen und Komponenten zur Stromversorgung von Leitungen und Komponenten zur Telekommunikation oder Datenverarbeitung.

Eine bevorzugte Ausführungsform ist dadurch gekennzeichnet, dass an dem Bodenteil und/oder an den Seitenteilen (an einem oder an beiden) außenseitig Ankerelemente angebracht sein können, welche von dem Bodenteil bzw. den Seitenteilen abstehen. Lediglich ein Beispiel für ein solches Ankerelement sind Doppelkopfanker oder Bewehrungsstäbe. Hierdurch kann beispielsweise bei einem Kabelkanal, welcher zum Eingießen in ein Bauwerk oder ein Betonfertigteil bestimmt und ausgelegt ist, eine statische Auslegung der Ankerelemente und/oder der Kabelrinne mit der Maßgabe erfolgen, dass das fertige Bauwerk bzw. Betonfertigteil statisch verstärkt wird. Dadurch ist es ggf. zudem möglich, mit weniger Einsatz von Beton eine gleichbleibende statische Stabilität zu erreichen.

Solche Ankerelemente können in verschiedenen Weisen an dem Bodenteil und/oder an den Seitenteilen befestigt sein. In einer ersten Variante sind die Ankerelemente an dem Bodenteil und/oder den Seitenteilen stoffschlüssig angebracht, beispielsweise angeschweißt oder angeklebt. Ebenso ist jedoch ein Annieten möglich, wobei dann das betreffende Bodenteil bzw. Seitenteil jeweils ein Loch für jeweils ein anzunietendes Ankerelement aufweist. Es kann aber auch vorgesehen sein, in dem Bodenteil bzw. Seitenteil Gewinde für einzuschraubende Ankerelemente anzubringen. Die Gewinde können in verschiedener Weise angebracht werden. Zum ersten kommen Einnietmuttern in Frage. Analog dem vorstehenden Nieten der Ankerelemente wird hier eine Mutter eingenietet und das zugehörige Ankerelement weist an einem Ende ein passendes Außengewinde auf. Es sind aber an Stelle von solchen Einnietmuttern auch beispielsweise U-Clip Muttern, Klemmmuttern oder Federmuttern einsetzbar. Dann weist das Bodenteil bzw. das Seitenteil Löcher auf, welche bei montierter besagter Mutter mit den Gewinden besagter Muttern fluchten und einen größeren Durchmesser aufweisen, als der Nenndurchmesser des betreffenden Gewindes. Schließlich können auch direkt in ein Seitenteil bzw. Bodenteil Gewinde geschnitten werden.

In einer anderen Ausführungsform der Erfindung können an dem Bodenteil und/oder an den Seitenteilen außen- und/oder innenseitig Befestigungselemente angebracht sein. Dies wird sich beispielsweise empfehlen, wenn der erfindungsgemäße Wandkanal zum Einbau in eine Trockenbauwand bestimmt ist. Außenseitige Befestigungselemente umfassen beispielweise federelastische Rastelemente, mittels welcher der Wandkanal in einem Schlitz in einer Trockenbauplatte eingerastet werden kann. Innenseitige Befestigungselemente umfassen beispielsweise von dem Inneren des Wandkanals nach außen verschiebbare oder drehbare Riegel, welche die Rückseite eines Trockenbauelementes hintergreifen.

Die Kabelrinne kann grundsätzlich aus einem beliebigen Werkstoff bestehen, welcher in der Regel nach der Maßgabe der beabsichtigten Verwendung ausgewählt ist. Typischerweise kann der Werkstoff Edelstahl, Normalstahl, verzinkter Normalstahl, Aluminium, Messing, organische Polymerwerkstoffe, Beton und faserverstärkter Beton sein, wobei auch Mischformen aus diesen Materialien möglich sind.

Die optischen Leitungen, elektrischen Leitungen, und/oder elektrischen und/oder elektronischen Schaltungen können ausgewählt sein aus der Gruppe bestehend aus optische Kabel zur Signalübermittlung, elektrische Signalkabel, elektrische Stromversorgungskabel, Anschlussbuchsen für vorstehende Kabel, Sensoren, Signalgeber, Schnittstellen zur drahtlosen Signalübertragung, Beleuchtungsmittel, induktive Ladestationen, und Kombinationen vorstehender Komponenten. Unter besagte Leitungen fallen beispielsweise Glasfaserkabel, Netzkabel, Telekommunikationskabel. Als Beleuchtungsmittel kommen beispielsweise LED Leuchten in Frage. Als Sensoren und Signalgeber kommen Lautsprecher, beleuchtete Schilder, Monitore, Displays, Rauchmelder, Wärmemelder, Brandschutzmelder, Datenmelder, Bewegungssensoren, Temperatursensoren, Kameras, usw. in Frage. Als elektronische Schaltungen kommen Datenjacks, Datenaustauschgeräte, WLAN- und Router Geräte, Bluetooth-Schnittstellen, Boardcomputer für Steuerungen eines Smarthome Bauwerkes oder drahtlose Ladepads zur Energieübertragung in Frage. Natürlich gehören auch Elektrische Steckdosensysteme dazu, sowohl für die Stromversorgung als auch zum Anschluss an elektronische Signale verarbeitende Geräte, wie beispielsweise Schuko-Steckdosen oder USB oder Ethernet Anschlüsse.

Es ist vorteilhaft, wenn an den Enden der Kabelrinne, in Längsrichtung der Kabelrinne betrachtet, mechanische, elektrische und/oder optische Anschlusselemente angeordnet sind zur modularen Verbindung der Enden verschiedener Wandkanäle. Dies erleichtert den Aufbau eines Stromversorgungs- oder Signalnetzwerkes im zu erstellenden Bauwerk. So werden beispielsweise benachbarte Betonfertigteile (Wand/Wand, Wand/Boden, oder Wand/Decke) mit integrierten Wandkanälen mit der Maßgabe ausgebildet, dass die Enden verschiedener Wandkanäle einander unmittelbar gegenüber liegen, wodurch dann die diversen Leitungen der verschiedenen Wandkanäle mittels der Anschlusselemente, beispielsweise steckbarer Anschlusselemente, schnell und einfach miteinander und zu einem Netz verbindbar sind.

Analoges gilt natürlich bezüglich des Anschlusses an andere Medien oder Gewerke (beispielsweise in Boden- oder Deckenkanälen, oder diskreter Anschlüsse). Auch können mechanische Anschlusselemente vorgesehen sein, wodurch auch eine statische Verbindung verschiedener Betonfertigteile erfolgen bzw. eine solche Verbindung verstärkt werden kann. Hierzu sind Adaptersysteme einsetzbar, welche ineinandergreifende Elemente aufweisen.

Insbesondere bei einem zum Eingießen in einen fluiden und aushärtbaren Bauwerkstoff bestimmten Wandkanal ist es vorteilhaft, wenn die freien Enden der Seitenteile und/oder die Enden der Kabelrinne, in Längsrichtung der Kabelrinne betrachtet, Dichtelemente aufweisen. Solche Dichtelemente können aus einem gummielastischen Werkstoff, beispielsweise als Gummilippen oder Schaumstoffelemente, ausgebildet sein und entweder fest mit der Kabelrinne verbunden oder auf die freien Enden der Seitenteile und/oder die Enden der Kabelrinne aufsteckbar sein.

Die Erfindung betrifft auch verschiedene Verwendungen eines erfindungsgemäßen Kabelkanals.

Eine erste Verwendung betrifft die Herstellung eines Betonfertigteiles oder eines Betonbauwerkes, wobei zunächst eine Schalung für das Betonfertigteil oder das Betonbauwerk bereitgestellt wird, dann die Kabelrinne bzw. der Wandkanal mit den freien Enden der Seitenteile, im Querschnitt des Kabelkanals betrachtet, an der Schalung angelegt und befestigt wird, dann die Schalung mit Beton gefüllt wird, dann der Beton ausgehärtet wird, und schließlich das mit der Aushärtung entstandene Betonfertigteil oder Betonbauwerk ausgeschalt wird, wobei vorzugsweise ein Betonfertigteil geschaffen wird, bei welchem die freien Enden der Seitenteile der Kabelrinne bzw. des Wandkanals und/oder die Kabelrinnenabdeckung bündig zu einer Oberfläche des Betonfertigteiles angeordnet sind. Analoges gilt für den Einsatz anderer fluider aushärtbarer Baustoffe als Beton. Insbesondere bei dieser Verwendung können vorteilhaft die vorstehend beschriebenen Ankerelemente eingesetzt werden. Eine Befestigung der Kabelrinne bzw. des Kabelkanals an der Schalung kann in fachüblicher Weise erfolgen, beispielsweise mittels Magnete an einer Stahlschalung oder mittels mechanischer Befestigungsmittel an einer nichtmagnetischen Schalung, beispielsweise einer Schalung aus Holz.

Eine zweite Verwendung dient zur Herstellung eines Bauwerkes, wobei zunächst ein Rohbauwerk bereit gestellt wird, wobei dann an (Innen- und/oder Außen-) Wandungen des Rohbauwerkes ein Tragwerk für zumindest ein Trockenbauelement angebracht wird, dann das Trockenbauelement an dem Tragwerk befestigt wird, dann in das Trockenbauelement eine Aussparung für die Kabelrinne bzw. den Wandkanal eingebracht wird, und schließlich die Kabelrinne bzw. der Wandkanal in die Aussparung eingesetzt und darin befestigt wird, wobei vorzugsweise ein Trockenbauelement geschaffen wird, bei welchem die freien Enden der Seitenteile von Kabelrinne/Wandkanal und/oder die Kabelrinnenabdeckung bündig zu einer Oberfläche des Trockenbauelementes angeordnet sind. Das Befestigen kann mittels der vorstehenden beschriebenen Befestigungselemente erfolgen.

Bei allen Verwendungen wird die Kabelrinne bzw. der Wandkanal nach Fertigung des Betonfertigteils, des Betonbauwerkes oder Anbringung des Trockenbauelementes, optional nach Anschluss der Anschlusselemente, mit der Kabelrinnenabdeckung versehen. Die Kabelrinnenabdeckung kann aus dem gleichen Werkstoff, wie die Kabelrinne bestehen. Sie kann optisch der Umgebung der Kabelrinne angepasst sein, aber auch als dekoratives Element vorgesehen sein. Dafür kommen Edelstahlblenden, Lichtbetonblenden oder Kunststoffblenden in Frage, ggf. farbig gestaltet.

Eine eigenständige Variante der Erfindung betrifft ein Betonfertigteil oder ein Betonbauwerk enthaltend zumindest einen vorstehend beschriebenen Wandkanal. Im Falle des Betonfertigteils wird ein modulares System von Betonfertigteilen geschaffen, mit welchen ein Bauwerk schnell erstellbar ist, und zwar einschließlich der besagten Leitungen, elektronischen Schaltungen und Anschlussvorrichtungen.

Alle vorstehenden Ausführungen zu einer Variante der Erfindung gelten analog auch für die anderen Varianten, ohne dass dies einer Wiederholung bedarf.

Im Folgenden wird die Erfindung anhand von lediglich Ausführungsbeispiele darstellenden Figuren näher erläutert. In den Ausführungsbeispielen ist im Wesentlichen auf Beleuchtungsmittel als elektrische Geräte abgestellt, sie lassen sich aber ganz analog auch für andere elektrische Geräte realisieren. Es zeigen:
- Fig. 1: eine Aufsicht auf einen erfindungsgemäßen Wandkanal,
- Fig. 2:: einen Querschnitt durch den Gegenstand der Figur 1,
- Fig. 3:: eine Aufsicht auf einen Endbereich des Gegenstandes der Figur 1
- Fig. 4:: einen Querschnitt durch einen Schalkörper zur Herstellung eines Fertigbauteils mit integriertem Wandkanal (in einem zwecks besserer Darstellbarkeit verzerrten Verhältnis von Dicke zu Höhe)

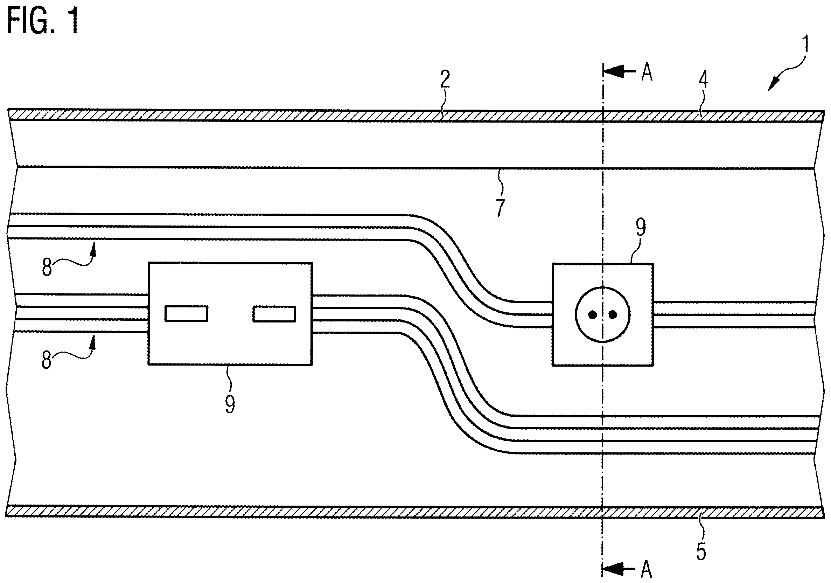

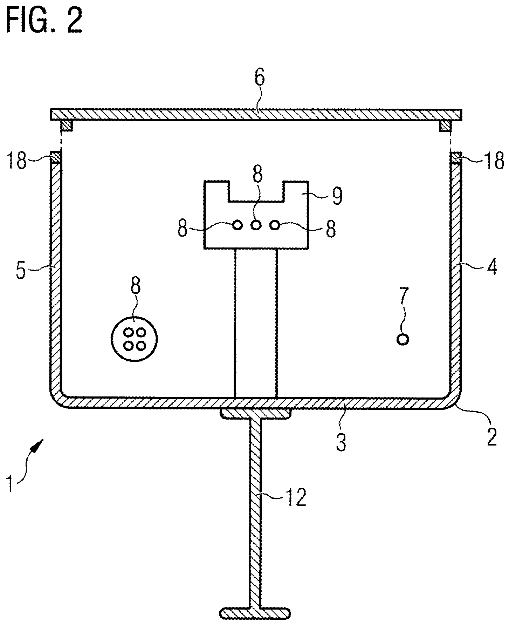

In einer vergleichenden Betrachtung der Figuren 1 und 2 erkennt man einen Wandkanal 1 für leitungsgebundene optische, elektrische und/oder elektronische Systeme, mit einer wannenförmigen Kabelrinne 2. Die Kabelrinne 2 weist ein Bodenteil 3 und zwei mit dem Bodenteil 3 verbundene Seitenteile 4, 5 auf. Der Figur 2 ist entnehmbar, dass eine Kabelrinnenabdeckung 6 vorgesehen ist. Das Bodenteil 3 und die Seitenteile 4, 5 sind geschlossenflächig ausgeführt. In der Kabelrinne 2 sind elektrische Leitungen 8, im Ausführungsbeispiel Stromversorgungleitungen und Datenleitungen, und optische Leitungen angeordnet. Man erkennt des Weiteren elektrische oder elektronische Anschlussvorrichtungen 7, im Ausführungsbeispiel USB Anschlüsse und eine Schuko-Steckdose. Der Wandkanal 1 ist dabei in der Form eines zum späteren Einbau in ein Betonfertigteil 10 oder Bauwerk vorbestimmten Bauelementes ausgebildet und eigenständig handhabbar ist. Der vergleichenden Betrachtung der Figuren 1 und 2 entnimmt man die Lagen der optische Leitungen 7, elektrischen Leitungen 8, und Datenanschlüsse sowie Stromversorgungsanschlüsse 9, welche in der Kabelrinne 2 verlegt und ggf. befestigt und vorkonfektioniert sind.

In der Figur 2 ist erkennbar, dass außenseitig an dem Bodenteil 3 Ankerelemente 12 angebracht sind, welche von dem Bodenteil 3 abstehen. Die Kabelrinne 2 besteht im Beispiel aus Edelstahl.

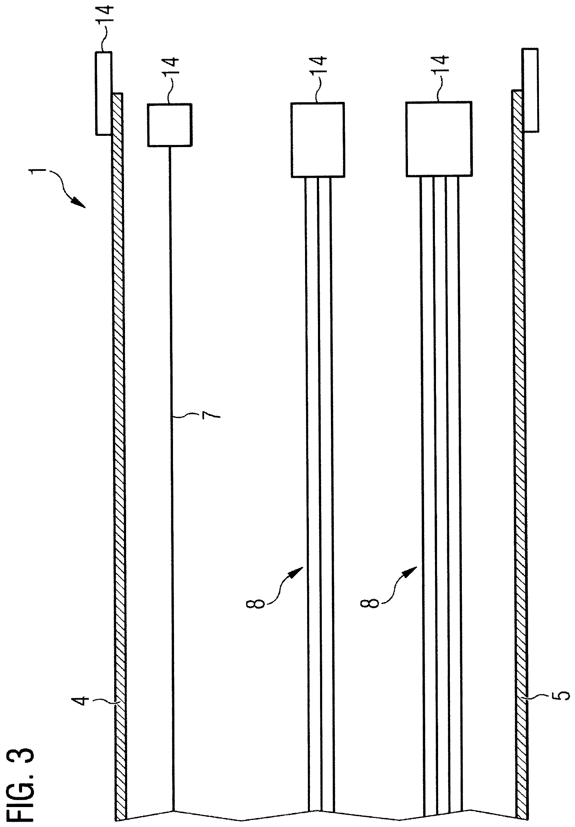

In der Figur 3 ist dargestellt, dass an den Enden der Kabelrinne 2, in Längsrichtung der Kabelrinne 2 betrachtet, mechanische, elektrische und/oder optische Anschlusselemente 14 angeordnet sein können zur modularen Verbindung der Enden verschiedener Wandkanäle 1.

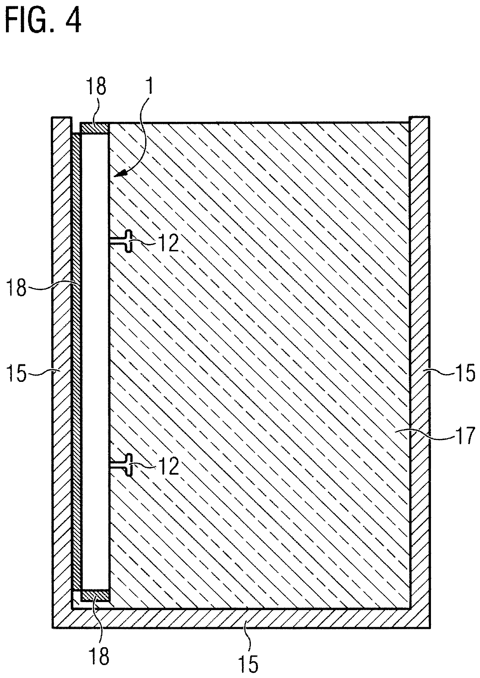

Die Figur 4 zeigt eine erfindungsgemäße Verwendung eines Wandkanals 1. Zur Herstellung eines Betonfertigteils mit integriertem Wandkanal 1 ist eine Schalung 15 für ein Betonfertigteil bereitgestellt. Die Kabelrinne 2 ist mit den freien Enden der Seitenteile 4, 5, im Querschnitt der Kabelrinne 2 betrachtet (siehe auch Figur 2), an der Schalung 15 angelegt und befestigt. Man erkennt, dass die freien Enden der Seitenteile 4, 5 und die Enden der Kabelrinne 2, in Längsrichtung der Kabelrinne 2 betrachtet, Dichtelemente 18 aufweisen. Die Schalung 16 mit Beton 17 gefüllt und der Beton 17 aushärten gelassen Das mit der Aushärtung entstandene Betonfertigteil wird schließlich ausgeschalt.

Nicht in den Figuren dargestellt ist eine Verwendung eines Wandkanals 1, wobei ein Rohbauwerk bereitgestellt wird, wobei an Wandungen des Rohbauwerkes ein Tragwerk für zumindest ein Trockenbauelement angebracht wird, wobei das Trockenbauelement an dem Tragwerk befestigt wird, wobei in das Trockenbauelement eine Aussparung für die Kabelrinne eingebracht wird, und wobei die Kabelrinne in die Aussparung eingesetzt und darin befestigt wird.

Die Kabelrinne 2 wird nach Fertigung des Betonfertigteils 10, des Betonbauwerkes 11 oder Anbringung des Trockenbauelementes, optional nach Anschluss der Anschlusselemente 14, mit der Kabelrinnenabdeckung 6 versehen.

## Patentansprüche

1. Wandkanal (1) für leitungsgebundene optische, elektrische und/oder elektronische Systeme, mit einer wannenförmige Kabelrinne (2), welche ein Bodenteil (3) und zwei mit dem Bodenteil (3) verbundene Seitenteile (4, 5) und eine Kabelrinnenabdeckung (6) aufweist, wobei das Bodenteil (3) und die Seitenteile (4, 5) optional geschlossenflächig ausgeführt sind, wobei in der Kabelrinne (2) optische Leitungen (7), elektrische Leitungen (8), und/oder elektrische und/oder elektronische Schaltungen und/oder elektrische oder elektronische Anschlussvorrichtungen (9) angeordnet sind,
**dadurch gekennzeichnet,**
**dass** der Wandkanal (1) in der Form eines zum späteren Einbau in ein Betonfertigteil (10) oder Bauwerk (11) vorbestimmten Bauelementes ausgebildet und eigenständig handhabbar ist, und
**dass** die optischen Leitungen (7), elektrischen Leitungen (8), und/oder elektrischen und/oder elektronischen Schaltungen (9) in der Kabelrinne (2) oder an der Kabelrinnenabdeckung (6) befestigt und vorkonfektioniert sind.

2. Wandkanal (1) nach Anspruch 1, **dadurch gekennzeichnet, dass** an dem Bodenteil (3) und/oder an den Seitenteilen (4, 5) außenseitig Ankerelemente (12) angebracht sind, welche von dem Bodenteil (3) und/oder den Seitenteilen (4, 5) abstehen.

3. Wandkanal (1) nach Anspruch 1, **dadurch gekennzeichnet, dass** an dem Bodenteil (3) und/oder an den Seitenteilen (4, 5) außen- und/oder innenseitig Befestigungselemente (13) angebracht sind.

4. Wandkanal (1) nach einem der Ansprüche 1 bis 3, **dadurch gekennzeichnet, dass** die Kabelrinne (2) aus einem Werkstoff besteht, welcher ausgewählt ist aus der Gruppe bestehend aus Edelstahl, Normalstahl, verzinkter Normalstahl, Aluminium, Messing, organische Polymerwerkstoffe, Beton und faserverstärkter Beton.

5. Wandkanal (1) nach einem der Ansprüche 1 bis 4, **dadurch gekennzeichnet, dass** die optischen Leitungen (7), elektrischen Leitungen (8), und/oder elektrischen und/oder elektronischen Schaltungen (9) ausgewählt sind aus der Gruppe bestehend aus optische Kabel zur Signalübermittlung, elektrische Signalkabel, elektrische Stromversorgungskabel, Anschlussbuchsen für vorstehende Kabel, Sensoren, Signalgeber, Schnittstellen zur drahtlosen Signalübertragung, Beleuchtungsmittel, induktive Ladestationen, und Kombinationen vorstehender Komponenten.

6. Wandkanal (1) nach einem der Ansprüche 1 bis 5, **dadurch gekennzeichnet, dass** an den Enden der Kabelrinne (2), in Längsrichtung der Kabelrinne (2) betrachtet, mechanische, elektrische und/oder optische Anschlusselemente (14) angeordnet sind zur modularen Verbindung der Enden verschiedener Wandkanäle (1) oder zum Anschluss an andere Medien oder Gewerke.

7. Wandkanal (1) nach einem der Ansprüche 1 bis 6, **dadurch gekennzeichnet, dass** die freien Enden der Seitenteile (4, 5) und/oder die Enden der Kabelrinne (2), in Längsrichtung der Kabelrinne (2) betrachtet, Dichtelemente (18) aufweisen.

8. Verwendung eines Wandkanals (1) nach einem der Ansprüche 1 bis 7 zur Herstellung eines Betonfertigteiles oder eines Betonbauwerkes, **dadurch gekennzeichnet**, eine Schalung (15) für das Betonfertigteil oder des Betonbauwerkes bereit gestellt wird, dass die Kabelrinne (2) mit den freien Enden der Seitenteile (4, 5), im Querschnitt der Kabelrinne (2) betrachtet, an der Schalung (15) angelegt und befestigt wird, dass die Schalung (16) mit Beton (17) gefüllt wird, dass der Beton (17) ausgehärtet wird, und dass das mit der Aushärtung entstandene Betonfertigteil oder Betonbauwerk ausgeschalt wird, wobei vorzugsweise ein Betonfertigteil geschaffen wird, bei welchem die freien Enden der Seitenteile (4, 5) und/oder die Kabelrinnenabdeckung (6) bündig zu einer Oberfläche des Betonfertigteiles angeordnet sind.

9. Verwendung eines Wandkanals (1) nach einem der Ansprüche 1 bis 7 zur Herstellung eines Bauwerkes, **dadurch gekennzeichnet, dass** ein Rohbauwerk bereit gestellt wird, dass an Wandungen des Rohbauwerkes ein Tragwerk für zumindest ein Trockenbauelement angebracht wird, dass das Trockenbauelement an dem Tragwerk befestigt wird, dass in das Trockenbauelement eine Aussparung für die Kabelrinne eingebracht wird, und dass die Kabelrinne in die Aussparung eingesetzt und darin befestigt wird, wobei vorzugsweise ein Trockenbauelement geschaffen wird, bei welchem die freien Enden der Seitenteile (4, 5) und/oder die Kabelrinnenabdeckung (6) bündig zu einer Oberfläche des Trockenbauelementes angeordnet sind.

10. Verwendung nach einem der Ansprüche 7 bis 9, **dadurch gekennzeichnet, dass** die Kabelrinne (2) nach Fertigung des Betonfertigteils, des Betonbauwerkes oder Anbringung des Trockenbauelementes, optional nach Anschluss der Anschlusselemente (14), mit der Kabelrinnenabdeckung (6) versehen wird.
